# EUROPÄISCHE PATENTSCHRIFT

(11) **EP 2 419 260 B1**
(45) Veröffentlichungstag und Bekanntmachung des Hinweises auf die Patenterteilung: **31.05.2017**
(21) Anmeldenummer: 10715692.9
(22) Anmeldetag: 14.04.2010
(51) Int. Cl.: B29C 70/30, B29C 70/56

(54) **VORRICHTUNG UND VERFAHREN ZUM DRAPIEREN VON FASERGEWIRKEN FÜR GEKRÜMMTE PROFILSTRUKTURTEILE AUS FASERVERBUNDMATERIAL**
APPARATUS AND METHOD FOR DRAPING KNITTED FIBER FABRICS FOR CURVED PROFILED STRUCTURAL PARTS OF FIBER COMPOSITE MATERIAL
PROCÉDÉ ET DISPOSITIF POUR LE DRAPAGE DE TRICOTS DE FIBRES, POUR DES PIÈCES STRUCTURALES PROFILÉES INCURVÉES EN UN MATÉRIAU COMPOSITE FIBREUX

(30) Priorität: 14.04.2009 DE 102009017361; 14.04.2009 US 169064 P
(43) Veröffentlichungstag der Anmeldung: 22.02.2012
(73) Patentinhaber: Airbus Operations GmbH, 21129 Hamburg (DE)
(72) Erfinder: SCHOPPMEIER, Jan, 30974 Wennigsen (DE); HERRMANN, Axel, 21683 Stade (DE)
(74) Vertreter: Beyer, Andreas
(86) Internationale Anmeldenummer: PCT/EP2010/002288
(87) Internationale Veröffentlichungsnummer: WO 2010/118858

(56) Entgegenhaltungen:
- DE-A1- 19 537 737
- GB-A- 2 061 177
- US-A- 3 074 116

## Beschreibung

Die Erfindung betrifft eine Vorrichtung und ein Verfahren zum Drapieren von Fasergewirken für gekrümmte Profilstrukturteile aus Faserverbundmaterial wie etwa GFK oder CFK. Mit dem Begriff "Profilstrukturteile" sind im Rahmen der vorliegenden Erfindung strukturgebende Bauteile gemeint, die für die strukturelle Festigkeit eines Körpers sorgen, d.h. Bauteile, die einen Teil der Tragstruktur eines Körpers wie beispielsweise eines Flugzeugrumpfes bilden können.

Die DE 195 37 737 A1 offenbart ein Verfahren zur Herstellung eines Verbundwerkstoff-Formkörpers mit einem Thermostreckverfahren. Ein Halbzeug, das aus einem faserverstärkten Mittelteil und einem nicht faserverstärkten Rahmenbesteht, wird in einem Einspannrahmen einer Thermoformanlage derart eingespannt, dass es nur mit seinem Rahmen zwischen die Einspannrahmenhälften des Einspannrahmens eingeklemmt ist. Das eingespannte Halbzeug wird mittels einer Heizeinrichtung erwärmt, so dass das thermoplastische Material des Halbzeugs fließfähig wird. Das Formwerkzeug wird anschließend an das Halbzeug herangefahren, so dass sich das Halbzeug mit seinem faserverstärkten Mittelteil konform über die Oberfläche des Formwerkzeugs legt, während der nicht-faserverstärkte Rahmen gestreckt wird. Der Thermoformvorgang wird durch ein Vakuum, das durch Absaugen von Luft durch Öffnungen im Formwerkzeug erzeugt wird, ausgeführt. Das Halbzeug wird dabei an die Konturen des Werkzeugs gesaugt. Mit anderen Worten legt sich das erwärmte Halbzeug aufgrund des erzeugten Vakuums an die Konturen des Formwerkzeugs an.

Die US 3,074,116 A offenbart ein Verfahren zum Herstellen von Strukturen aus Kunststoff und Metallen. Dabei wird ein Formkörper mit einer konvexen Oberfläche mit einem aushärtenden Material überzogen, das sich nach einer vorbestimmten Zeit verfestigt. Ein Rahmen wird oberhalb des Formkörpers angeordnet und ist an zwei gegenüberliegenden Seiten mit einer Spannvorrichtung versehen. Die Spannvorrichtung an den gegenüberliegenden Seiten des Rahmens weist Zähne auf, durch die sich Drähte erstrecken, welche in das auf den Formkörper aufgebrachte Material eingebracht werden sollen. Der Rahmen weist ferner auf einer Welle gelagerte Scheiben auf. Die Drähte werden von den Zähnen der Spannvorrichtungen an dem Rahmen voneinander beabstandet gehalten und jeweils ein Draht wird um eine ihm zugeordnete Scheibe geführt. Jeder Draht wird über ein Gewicht gespannt. Während das auf dem Formkörper aufgebrachte Material noch klebrig ist, erfolgt eine Relativbewegung zwischen dem Rahmen und dem Formkörper, wobei die Drähte von dem Material auf dem Formkörper aufgenommen werden. Das Material auf der Oberfläche des Formkörpers hält den Abstand zwischen den einzelnen Drähten aufrecht, lässt jedoch eine Bewegung der Drähte in Längsrichtung aufgrund der Scheiben und ihren Gewichten zu. Die Drähte und der Formkörper verbleiben in dem beschriebenen Zustand, bis das auf den Formkörper aufgebrachte Material aushärtet und die Drähte demzufolge mit diesem Material verbunden sind.
Insbesondere im Flugzeugbau wird seit einiger Zeit vermehrt die Anwendbarkeit von Profilstrukturteilen aus Fasergewirken untersucht, wobei mit Fasergewirken glasfaserverstärkte (GFK) oder kohlefaserverstärkte (CFK) Gewebe, Gelege oder Gewirke in beispielsweise Mattenform oder Bandform gemeint sind. Zur Bildung eines Profilstrukturteiles aus Faserverbundmaterial müssen zunächst die Fasern vorkonfektioniert und entsprechend ihrer geforderten Orientierung ausgerichtet werden. Die vorkonfektionierten Gewebe, Gelege oder Gewirke müssen dann schichtweise in die gewünschte Form gelegt, d.h. drapiert werden. Insbesondere bei gekrümmten Profilstrukturen ist dieser Drapierprozess schwierig und dementsprechend aufwändig. Die Fasergewirke müssen zur Erzielung gekrümmter Geometrien aufgrund der Längendifferenzen zwischen dem Außenrand und dem Innenrand in Bögen gelegt werden, was zu einer unerwünschten Faltenbildung führen kann. Eine weitere Schwierigkeit stellt die Einhaltung der gewünschten Faserausrichtung auf dem Formwerkzeug dar.

Nach dem Drapieren wird der erhaltene, mehrlagige Laminataufbau fixiert. Dies erfolgt üblicherweise in einem sogenannten Preformschritt, in dem der mit einem bindenden Material, welches in der Regel unter Wärmezufuhr seine fixierende Wirkung entfaltet, gepulverte Laminataufbau erwärmt wird, um das Bindermaterial auszuhärten. Alternativ können bereits mit einem bindenden Material getränkte Gewebe, Gelege oder Gewirke verwendet werden, sogenannte Prepregs.

Ein Anwendungsbeispiel für zukünftige Profilstrukturteile aus Faserverbundmaterial sind Spanten, wie sie in einem Flugzeugrumpf und in Flugzeugtragflächen zum Einsatz kommen. Bisher müssen solche aus Fasergewirken hergestellte Spanten zeitaufwendig hergestellt werden, indem die einzelnen Gewebelagen in mühseliger Handarbeit auf ein entsprechendes Formwerkzeug drapiert, dort vorläufig fixiert und dann unter Wärmezufuhr zu einem Vorformling verbacken werden. Wenn zukünftig Spanten aus Fasergewirken im Flugzeugserienbau Verwendung finden sollen, ist eine solche Art der Herstellung zu langsam und zu unwirtschaftlich.

Der Erfindung liegt die Aufgabe zugrunde, hier Abhilfe zu schaffen und eine Vorrichtung sowie ein Verfahren zum Drapieren von Fasergewirken für gekrümmte Profilstrukturteile aus Faserverbundmaterial anzugeben, mit der bzw. mit dem es schneller und kostengünstiger möglich ist, eine große Anzahl solcher Profilstrukturteile in reproduzierbarer Qualität zu drapieren.

Diese Aufgabe ist erfindungsgemäß durch eine Vorrichtung mit den Merkmalen des beigefügten Patentanspruchs 1 und mit einem Verfahren gelöst, das die im beigefügten Patentanspruch 6 angegebenen Schritte umfasst.

Die erfindungsgemäße Vorrichtung weist demnach mindestens ein Formwerkzeug mit einer Formoberfläche auf, welche wenigstens einem Abschnitt der gewünschten Profilgeometrie und Krümmung des späteren Profilstrukturteils entspricht. Die Form-oberfläche kann dabei so ausgeführt sein, dass sie der gewünschten Profilgeometrie und Krümmung des vollständigen, zu fertigenden Profilstrukturteils entspricht. Alternativ können mehrere Formwerkzeuge mit jeweils einer Formoberfläche vorgesehen sein, wobei dann alle Formoberflächen zusammen die gewünschte Profilgeometrie und Krümmung des späteren Profilstrukturteils bilden.

Die erfindungsgemäße Drapiervorrichtung umfasst ferner mindestens eine Spanneinrichtung zum Einspannen wenigstens einer Lage eines Fasergewirkes längs einer Spannlinie in vorgespanntem Zustand. Die Spanneinrichtung kann so ausgeführt sein, dass sie eine einzige Fasergewirklage einspannt, sie kann aber auch so ausgeführt sein, dass sie mehrere übereinanderliegende Fasergewirklagen gemeinsam einspannt. Die Spanneinrichtung kann auch so ausgeführt sein, dass sie mehrere Lagen aus Fasergewirk separat und im Abstand voneinander längs zueinander paralleler Spannlinien eingespannt hält. Statt einer Spanneinrichtung können hierzu auch mehrere Spanneinrichtungen Verwendung finden. Die Spanneinrichtung oder die Mehrzahl von Spanneinrichtungen dient dazu, jede Fasergewirklage längs einer der Fasergewirklage zugehörigen Spannlinie solchermaßen einzuspannen, d.h. festzuhalten, dass die eingespannte Fasergewirklage längs der Spannlinie auf Zug belastet ist, d.h. längs der Spannlinie ständig unter Zugspannung gehalten wird. Vorzugsweise ist jede zum Einspannen vorgesehene Fasergewirklage vorkonfektioniert, d.h. zumindest in eine gewünschte Länge geschnitten.

Schließlich umfasst die erfindungsgemäße Drapiervorrichtung eine Bewegungseinrichtung zum Erzeugen einer Relativbewegung zwischen dem Formwerkzeug oder den Formwerkzeugen und der wenigstens einen eingespannten Lage des Fasergewirkes derart, dass sich die Formoberfläche des Formwerkzeugs (oder die Formoberflächen der Formwerkzeuge) der Fasergewirklage in einer Richtung rechtwinklig oder zumindest annähernd rechtwinklig zur Spannlinie annähert und die Spannlinie im weiteren Verlauf der Relativbewegung soweit durchstößt, dass die Fasergewirklage oder jede Fasergewirklage die Formoberfläche (oder die Formoberflächen) vollständig bedeckt. Sind mehrere Fasergewirklagen vorhanden, dann bedeutet dies, dass die Spannlinien aller Fasergewirklagen so weit durchstoßen werden, bis auch die letzte, d.h. am weitesten von der Formoberfläche entfernte Fasergewirklage vollständig auf der Formoberfläche aufliegt.

Gemäß einer bevorzugten Ausgestaltung der erfindungsgemäßen Drapiervorrichtung hält die Spanneinrichtung die von ihr eingespannte Fasergewirklage, oder gegebenenfalls mehrere Fasergewirklagen, in einem vorgeformten Zustand quer zur Spannlinie. Beispielsweise kann dieser vorgeformte Zustand eine Z-Form sein, d.h. die von der Spanneinrichtung unter Zugspannung gehaltene Fasergewirklage hat einen Z-förmigen Querschnitt. Selbstverständlich sind andere Querschnittsformen ebenso möglich, beispielsweise eine L-Form, eine S-Form usw.. Auf diese Weise lassen sich auch komplizierter geformte Profilstrukturteile aus Faserverbundmaterial einfach und mit hoher Wiederholgenauigkeit drapieren.

Die eingangs genannte Aufgabe ist auch durch ein Verfahren zum Drapieren von Fasergewirken für gekrümmte Profilstrukturteile aus Faserverbundmaterial gelöst, das die folgenden Schritte aufweist:
- Spannen wenigstens einer Lage eines Fasergewirkes längs einer Spannlinie, wobei während des gesamten Drapiervorgangs eine Zugkraft längs der Spannlinie auf die Lage ausgeübt wird,
- Ausführen einer Relativbewegung zum Verringern eines Abstands zwischen einer auf einem Formwerkzeug vorhandenen Formoberfläche und der wenigstens einen Fasergewirklage derart, dass sich die Formoberfläche der Fasergewirklage in einer Richtung rechtwinklig oder zumindest annähernd rechtwinklig zur Spannlinie annähert, und
- Fortführen der Relativbewegung solange, bis die Spannlinie durchstoßen ist und die Fasergewirklage die Formoberfläche vollständig bedeckt. Vorzugsweise wird jede Fasergewirklage vorkonfektioniert, d.h. zumindest in eine gewünschte Länge gebracht, bevor sie längs der Spannlinie gespannt wird.

Wie bereits zuvor im Zusammenhang mit der erfindungsgemäßen Vorrichtung beschrieben, können auch beim erfindungsgemäßen Verfahren mehrere Lagen aus Fasergewirk entweder übereinanderliegend oder separat und im Abstand voneinander längs zueinander paralleler Spannlinien gespannt werden, wobei dann die Relativbewegung solange fortgeführt wird, bis jede Spannlinie durchstoßen ist und jede Fasergewirklage die Formoberfläche vollständig bedeckt. Ebenso kann die oder können mehrere oder alle Fasergewirklagen so gespannt werden, dass sich eine vorbestimmte Querschnittsform ergibt, beispielsweise eine Z-Form, eine L-Form, eine S-Form usw..

Jede Fasergewirklage kann ein sogenanntes Prepreg sein, d.h. eine mit einem Bindemittel vorimprägnierte Fasergewirklage. Werden mehrere Fasergewirklagen verwendet, so können eine, mehrere oder alle Lagen Prepregs sein.

Beim erfindungsgemäßen Drapierverfahren vollzieht sich der eigentliche Drapiervorgang an der Stelle, an dem die noch frei gespannte, tangential auf die Formoberfläche zulaufende Fasergewirklage auf das Formwerkzeug trifft und dort im Kontakt mit ihm in seine Krümmung gezwungen wird. Mit anderen Worten, das Formwerkzeug zwingt jeder Fasergewirklage die Profilgeometrie auf. Aus der vorgegebenen Krümmung resultierende Längenunterschiede zwischen einem gegebenenfalls vorhandenen Außen- und Innengurt der Fasergewirklage werden ebenfalls an dieser Stelle ausgeglichen, durch eine unterschiedlich starke Dehnung des Außen- und Innengurtes.

Mittels der erfindungsgemäßen Drapiervorrichtung und mittels des erfindungsgemäßen Drapierverfahrens lassen sich gekrümmte Profile aus Fasergewirken schnell und einfach drapieren. Die Qualität der solchermaßen drapierten Vorformlinge ist sehr hoch und darüber hinaus reproduzierbar. Der Drapiervorgang lässt sich mit verhältnismäßig geringem Investitionsaufwand stark automatisieren, da für die erfindungsgemäße Drapiervorrichtung auf bewährte und einfache Technologien zurückgegriffen werden kann. Erfindungsgemäß lassen sich deshalb gekrümmte Profile in hoher Stückzahl schnell und mit hoher Qualität herstellen. Ferner sind die erfindungsgemäße Vorrichtung und das erfindungsgemäße Verfahren für eine Vielzahl unterschiedlicher Geometrien und Laminataufbauten einsetzbar. Bei einer Änderung der Geometrie muss lediglich das Formwerkzeug entsprechend geändert werden.

Im Rahmen der vorliegenden Erfindung ist der Begriff "Fasergewirk" nicht auf gewirkte Materialien eingeschränkt, sondern umfasst auch gewebte Materialien und gelegte Materialien, z.B. Vliesmaterialien.

Ein Ausführungsbeispiel der Erfindung wird im Folgenden anhand der beigefügten, schematischen Figuren näher erläutert. Es zeigt:
- Figur 1: eine erfindungsgemäße Drapiervorrichtung mit einem Formwerkzeug in einem Ausgangszustand, und
- Figur 2: die Drapiervorrichtung aus Figur 1 in einem Zwischenzustand mit einer teilweise aufdrapierten ersten Fasergewirklage.

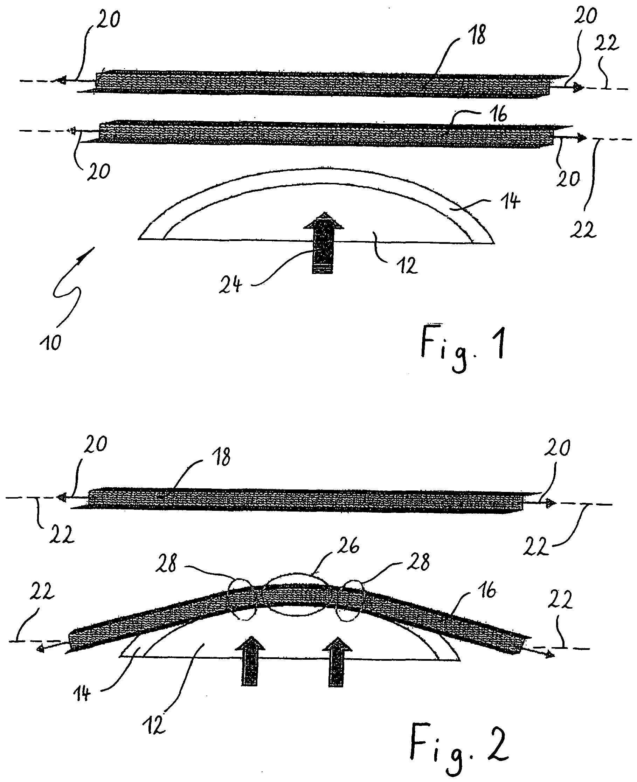

Fig. 1 zeigt schematisch eine Vorrichtung 10 zum Drapieren von Fasergewirken. Das Drapieren der zumeist bahnförmigen Fasergewirke stellt einen wichtigen Schritt bei der Herstellung gekrümmter Profilstrukturteile aus Faserverbundmaterial wie CFK und GFK dar.

Die Drapiervorrichtung 10 umfasst ein Formwerkzeug 12 mit einer Formoberfläche 14, die im dargestellten Ausführungsbeispiel die Form eines Spants für einen Flügel eines Flugzeugs hat. Die Formoberfläche 14 des dargestellten Formwerkzeugs 12 ist nicht nur wie ersichtlich in Längsrichtung gekrümmt, sondern weist darüber hinaus einen dreidimensionalen Querschnitt in Z-Form auf, d.h. sie besteht aus einem in Querschnittsrichtung waagerecht verlaufenden, ersten Abschnitt, von dessen einem Ende sich ein zweiter Abschnitt vertikal nach oben erstreckt, an den sich ein wiederum waagerecht und somit parallel zum ersten Abschnitt verlaufender dritter Abschnitt anschließt.

Oberhalb und mit Abstand von der Formoberfläche 14 erstrecken sich zwei bahnförmige Lagen 16, 18 eines einzeln vorkonfektionierten Fasergewirkes in einer Richtung, die zur Längserstreckung der Formoberfläche 14 parallel ist. Die beiden Fasergewirklagen 16, 18 werden von einer Spanneinrichtung gehalten, die hier lediglich durch Pfeile 20 symbolisiert ist und jede Fasergewirklage 16, 18 längs einer zugehörigen Spannlinie 22 unter Zugspannung hält. Jede Spannlinie 22 verläuft in Längsrichtung der zugeordneten Fasergewirklage 16 oder 18 und somit parallel zur Längserstreckung der Formoberfläche 14.

Zum Einspannen jeder Fasergewirklage 16, 18 weist die Spanneinrichtung nicht dargestellte Einspannelemente auf, in denen jeweils ein Ende einer Fasergewirklage 16 oder 18 so befestigt ist, dass die entsprechende Fasergewirklage von der Spanneinrichtung unter Zugspannung gesetzt werden kann. Beispielsweise kann es sich bei diesen Einspannelementen um klammerförmige Elemente handeln, die ein Ende einer Fasergewirklage zwischen zwei Backen festklemmen.

Wie dargestellt wird jede Fasergewirklage 16, 18 von der Spanneinrichtung in einer der Form der Formoberfläche 14 entsprechenden Z-förmigen Gestalt vorgespannt gehalten. Die zwei Fasergewirklagen 16, 18 sind zudem voneinander beabstandet. Anstelle einer Spanneinrichtung, die die gezeigten zwei Fasergewirklagen 16, 18 und gegebenenfalls noch weitere Fasergewirklagen eingespannt hält, können auch mehrere Spanneinrichtungen Verwendung finden, die jeweils nur eine Fasergewirklage eingespannt halten.

Um die beiden Fasergewirklagen 16, 18 auf die Formoberfläche 14 zu drapieren, ist das Formwerkzeug 12 mittels einer durch einen Pfeil 24 symbolisierten Bewegungseinrichtung in einer Richtung auf die Fasergewirklagen 16, 18 zu bewegbar, die hier rechtwinklig zu den Spannlinien 22 verläuft. Je nach Anwendungsfall kann diese Bewegungsrichtung jedoch auch von dem genannten rechten Winkel abweichen. Beim Verfahren des Formwerkzeugs 12 in Richtung der Fasergewirklagen 16, 18 berührt zunächst die Mitte (in Längsrichtung gesehen) der Formoberfläche 14 die erste Fasergewirklage 16 und nimmt anschließend, bei fortgesetzter Bewegung des Formwerkzeugs 12 in der genannten Richtung, die gespannte Fasergewirklage 16 mit, wodurch sich das Fasergewirk exakt an die Formoberfläche 14 anlegt (siehe Fig. 2).

Je weiter das Formwerkzeug 12, genauer dessen Formoberfläche 14, die Spannlinie 22 durchstößt, umso größer wird der Bereich der Formoberfläche 14, an der das drapierte Fasergewirk bereits anliegt. Der eigentliche Drapiervorgang vollzieht sich dabei an der Stelle, an dem die noch frei gespannte, tangential auf die Formoberfläche 14 zulaufende Fasergewirklage auf die Formoberfläche 14 trifft und dort durch den Kontakt mit ihr in die durch die Formoberfläche 14 vorgegebene Gestalt gezwungen wird. In Fig. 2 stellt ein mit 26 markierter Bereich einen Abschnitt der Fasergewirklage 16 dar, der bereits fertig drapiert ist, wohingegen die beiden mit 28 bezeichneten Bereiche links und rechts des Bereiches 26 Abschnitte der Fasergewirklage 16 darstellen, in denen der Drapiervorgang gerade stattfindet. Im Ergebnis zwingt das Formwerkzeug 12 mittels seiner Formoberfläche 14 der Fasergewirklage 16 seine Profilgeometrie auf. Längenunterschiede zwischen einem Außen- und Innengurt der Fasergewirklage 16, die aus der vorgegebenen Krümmung der Formoberfläche 14 resultieren, werden beim Drapieren in den Bereichen 28 durch eine entsprechend unterschiedliche Dehnung des Fasergewirkes ausgeglichen, so dass die Fasergewirklage 16 sich exakt an die Formoberfläche 14 anpasst.

Nachdem die erste Fasergewirklage 16 wie beschrieben auf die Formoberfläche 14 drapiert worden ist, führt eine weiter fortgesetzte Bewegung des Formwerkzeugs 12 mittels der Bewegungseinrichtung 24 in der angegebenen Richtung zu einem Drapieren auch der zweiten Fasergewirklage 18 auf die Formoberfläche 14 bzw. genauer auf die erste Fasergewirklage 16 in gleicher Weise wie im Zusammenhang mit dem Drapieren der ersten Fasergewirklage 16 beschrieben. Die Spanneinrichtung 20 kann so ausgestaltet sein, dass sie der beim Drapiervorgang aufgrund der in Längsrichtung gekrümmten Formoberfläche 14 auftretenden "Verkürzung" jeder Fasergewirklage Rechnung trägt, beispielsweise indem die nicht gezeigten Einspannelemente sich im Verlauf des Drapiervorgangs einer Fasergewirklage zunehmend längs der Spannlinie 22 nach innen bewegen, um so die auf jede Fasergewirklage wirkende Zugkraft gleich zu halten.

Im gezeigten Ausführungsbeispiel wird das Formwerkzeug 12 in Richtung auf die Fasergewirklagen 16, 18 bewegt. Es versteht sich jedoch, dass das Formwerkzeug 12 auch stationär gehalten und stattdessen die Spanneinrichtung(en) 20 zusammen mit den eingespannten Fasergewirklagen 16, 18 in Richtung auf das Formwerkzeug 12 bewegt werden kann, um die Fasergewirklagen 16, 18 auf die Formoberfläche 14 zu drapieren.

## Patentansprüche

1. Vorrichtung (10) zum Drapieren von Fasergewirken für gekrümmte Profilstrukturteile aus Faserverbundmaterial, mit
- mindestens einem Formwerkzeug (12) mit einer Formoberfläche (14), welche wenigstens einem Abschnitt der gewünschten Profilgeometrie und Krümmung des späteren Profilstrukturteils entspricht,
- mindestens einer Spanneinrichtung (20) zum Einspannen wenigstens einer Lage (16) eines Fasergewirkes längs einer Spannlinie (22) in vorgespanntem Zustand, und
- einer Bewegungseinrichtung (24) zum Erzeugen einer Relativbewegung zwischen dem Formwerkzeug (12) und der wenigstens einen eingespannten Lage (16) des Fasergewirkes derart, dass sich die Formoberfläche (14) des Formwerkzeugs (12) der Fasergewirklage (16) in einer Richtung rechtwinklig oder zumindest annähernd rechtwinklig zur Spannlinie (22) annähert und die Spannlinie (22) im weiteren Verlauf der Relativbewegung soweit durchstößt, dass die Fasergewirklage (16) die Formoberfläche (14) vollständig bedeckt,
wobei die Spanneinrichtung (20) dazu eingerichtet ist, die Lage (16) des Fasergewirks während des gesamten Drapiervorgangs mit einer längs der Spannlinie (22) wirkenden Zugkraft zu belasten.

2. Vorrichtung nach Anspruch 1,
**dadurch gekennzeichnet, dass** mehrere Formwerkzeuge mit jeweils einer Formoberfläche zusammen die gewünschte Profilgeometrie und Krümmung des späteren Profilstrukturteils bilden.

3. Vorrichtung nach Anspruch 1 oder 2,
**dadurch gekennzeichnet, dass** die Spanneinrichtung (20) oder eine Mehrzahl von Spanneinrichtungen (20) mehrere Lagen (16, 18) aus Fasergewirk separat und im Abstand voneinander längs zueinander paralleler Spannlinien (22) eingespannt hält.

4. Vorrichtung nach einem der vorhergehenden Ansprüche,
**dadurch gekennzeichnet, dass** die Spanneinrichtung (20) oder mehrere Spanneinrichtungen (20) die von ihnen eingespannte Fasergewirklage (16, 18) in einem vorgeformten Zustand eingespannt halten.

5. Vorrichtung nach Anspruch 4,
**dadurch gekennzeichnet, dass** der vorgeformte Zustand eine Z-Form ist.

6. Verfahren zum Drapieren von Fasergewirken für gekrümmte Profilstrukturteile aus Faserverbundmaterial, mit den Schritten:
- Spannen wenigstens einer Lage (16) eines Fasergewirkes längs einer Spannlinie (22), wobei während des gesamten Drapiervorgangs eine Zugkraft längs der Spannlinie (22) auf die Lage (16) ausgeübt wird,
- Ausführen einer Relativbewegung zum Verringern eines Abstands zwischen einer auf einem Formwerkzeug vorhandenen Formoberfläche (14) und der wenigstens einen Fasergewirklage (16) derart, dass sich die Formoberfläche der Fasergewirklage (16) in einer Richtung rechtwinklig oder zumindest annähernd rechtwinklig zur Spannlinie (22) annähert, und
- Fortführen der Relativbewegung solange, bis die Spannlinie (22) durchstoßen ist und die Fasergewirklage (16) die Formoberfläche (14) vollständig bedeckt.

7. Verfahren nach Anspruch 6,
**dadurch gekennzeichnet, dass** mehrere Lagen (16, 18) aus Fasergewirk separat und im Abstand voneinander längs zueinander paralleler Spannlinien (22) gespannt werden, wobei die Relativbewegung solange fortgeführt wird, bis jede Spannlinie (22) durchstoßen ist und jede Fasergewirklage (16, 18) die Formoberfläche (14) vollständig bedeckt.

8. Verfahren nach Anspruch 6 oder 7,
**dadurch gekennzeichnet, dass** die oder mehrere oder alle Fasergewirklagen (16, 18) so gespannt werden, dass sich eine vorbestimmte Querschnittsform ergibt.

9. Verfahren nach Anspruch 8,
**dadurch gekennzeichnet, dass** die vorbestimmte Querschnittsform eine Z-Form ist.

10. Verfahren nach einem der Ansprüche 6 bis 9,
**dadurch gekennzeichnet, dass** die Fasergewirklage (16, 18) ein Prepreg ist.

11. Verfahren nach einem der Ansprüche 6 bis 10,
**dadurch gekennzeichnet, dass** jede Fasergewirklage (16, 18) vorkonfektioniert wird.

## Claims

1. Apparatus (10) for draping knitted fiber fabrics for curved profiled structural parts of fiber composite material, comprising
- at least one mold (12) having a mold surface (14) that corresponds to at least a portion of the desired profile geometry and curvature of the subsequent profiled structural part,
- at least one clamping device (20) for tensioning at least one layer (16) of a knitted fiber fabric along a tensioning line (22) in a prestressed state, and
- a movement device (24) for producing a relative movement between the mold (12) and the at least one clamped-in layer (16) of the knitted fiber fabric in such a way that the mold surface (14) of the mold (12) approaches the knitted fiber fabric layer (16) in a direction perpendicular or at least approximately perpendicular to the tensioning line (22) and, in the further course of the relative movement, pushes through the tensioning line (22) to such an extent that the knitted fiber fabric layer (16) completely covers the mold surface (14),
wherein the clamping device (20) is equipped to load the layer (16) of the knitted fiber fabric during the entire draping operation with a tensile force acting along the tensioning line (22).

2. Apparatus according to claim 1,
**characterized in that** a plurality of molds each having a mold surface together form the desired profile geometry and curvature of the subsequent profiled structural part.

3. Apparatus according to claim 1 or 2,
**characterized in that** the clamping device (20) or a plurality of clamping devices (20) keep a plurality of layers (16, 18) of knitted fiber fabric clamped in separately and at a distance from one another along mutually parallel tensioning lines (22).

4. Apparatus according to one of the preceding claims,
**characterized in that** by means of the clamping device (20) or a plurality of clamping devices (20) the knitted fiber fabric layer (16, 18), which is clamped in thereby, is held clamped-in in a preformed state.

5. Apparatus according to claim 4,
**characterized in that** the preformed state is a Z-shape.

6. Method of draping knitted fiber fabrics for curved profiled structural parts of fiber composite material, comprising the steps:
- tensioning at least one layer (16) of a knitted fiber fabric along a tensioning line (22), wherein during the entire draping operation a tensile force is exerted on the layer (16) along the tensioning line (22),
- executing a relative movement to reduce a distance between a mold surface (14) situated on the mold and the at least one knitted fiber fabric layer (16) in such a way that the mold surface approaches the knitted fiber fabric layer (16) in a direction perpendicular or at least approximately perpendicular to the tensioning line (22), and
- continuing the relative movement until the tensioning line (22) is penetrated and the knitted fiber fabric layer (16) completely covers the mold surface (14).

7. Method according to claim 6,
**characterized in that** a plurality of layers (16, 18) of knitted fiber fabric are clamped separately and at a distance from one another along mutually parallel tensioning lines (22), wherein the relative movement is continued until each tensioning line (22) has been penetrated and each knitted fiber fabric layer (16, 18) completely covers the mold surface (14).

8. Method according to claim 6 or 7,
**characterized in that** the knitted fiber fabric layer or some or all of the knitted fiber fabric layers (16, 18) are tensioned in such a way as to result in a predetermined cross-sectional shape.

9. Method according to claim 8,
**characterized in that** the predetermined cross-sectional shape is a Z-shape.

10. Method according to one of claims 6 to 9,
**characterized in that** the knitted fiber fabric layer (16, 18) is a prepreg.

11. Method according to one of claims 6 to 10,
**characterized in that** each knitted fiber fabric layer (16, 18) is prefabricated.

## Revendications

1. Dispositif (10) de drapage de tissus maillés de fibres destinés à des pièces structurales profilées incurvées fabriquées à partir d'un matériau composite constitué de fibres, comprenant
- au moins un outil de formage (12) pourvu d'une surface de formage (14), laquelle correspond au moins à une partie de la géométrie de profil souhaitée et de la courbure de la future pièce structurale profilée,
- au moins un dispositif tendeur (20) servant à maintenir dans un état de prétension, le long d'une ligne de tension (22), au moins une couche (16) d'un tissu maillé de fibres, et
- un dispositif de mouvement (24) pour générer un mouvement relatif entre l'outil de formage (12) et ladite au moins une couche de tissu maillé de fibres (16) tendue, de telle sorte que la surface de formage (14) de l'outil de formage (12) se rapproche dans une direction, d'une manière perpendiculaire ou pour le moins à peu près perpendiculaire à la ligne de tension (22), de la couche de tissu maillé de fibres (16), et traverse la ligne de tension (22) lors de la poursuite du mouvement relatif de façon que la couche de tissu maillé de fibres (16) recouvre complètement la surface de formage (14),
le dispositif tendeur (20) étant conçu pour exercer sur la couche (16) de tissu maillé de fibres, pendant toute la durée du drapage, une force de traction agissant le long de la ligne de tension (22).

2. Dispositif selon la revendication 1,
**caractérisé en ce que** plusieurs outils de formage pourvus chacun d'une surface de formage réalisent conjointement la géométrie de profil souhaitée et la courbure de la future pièce structurale.

3. Dispositif selon la revendication 1 ou 2,
**caractérisé en ce que** le dispositif tendeur (20) ou une pluralité de dispositifs tendeurs (20) maintiennent tendues séparément et à distance les unes des autres plusieurs couches (16, 18) de tissu maillé de fibres, le long de lignes de tension (22) parallèles.

4. Dispositif selon l'une des revendications précédentes,
**caractérisé en ce que** le dispositif tendeur (20) ou plusieurs dispositifs tendeurs (20) maintiennent tendue, dans un état préformé, la couche (16, 18) de tissu maillé de fibres tendue par lesdits dispositifs.

5. Dispositif selon la revendication 5,
**caractérisé en ce que** l'état préformé consiste en une forme en Z.

6. Procédé permettant de draper des tissus maillés de fibres pour pièces structurales profilées incurvées fabriquées à partir d'un matériau composite constitué de fibres, comprenant les étapes suivantes :
- le maintien en tension d'au moins une couche (16) d'un tissu maillé de fibres le long d'une ligne de tension (22), une force de traction étant exercée sur la couche (16) pendant toute la durée du drapage, le long de la ligne de tension (22),
- la réalisation d'un mouvement relatif afin de réduire un écart entre une surface de formage (14) présente sur un outil de formage et ladite au moins une couche de tissu maillé de fibres (16) de manière à ce que la surface de formage se rapproche dans une direction, d'une manière perpendiculaire ou pour le moins à peu près perpendiculaire à la ligne de tension (22), de la couche de tissu maillé de fibres (16), et
- la poursuite du mouvement relatif jusqu'à ce que la ligne de tension (22) soit traversée et que la couche de tissu maillé de fibres (16) recouvre complètement la surface de formage (14).

7. Procédé selon la revendication 6,
**caractérisé en ce que** plusieurs couches de tissu maillé de fibres (16, 18) sont tendues séparément et à distance les unes des autres, le long de lignes de tension (22) parallèles, le mouvement relatif se poursuivant jusqu'à que ce que chaque ligne de tension (22) soit traversée et que chaque couche de tissu maillé de fibres (16, 18) recouvre complètement la surface de formage (14).

8. Procédé selon la revendication 6 ou 7,
**caractérisé en ce que** la ou plusieurs ou toutes les couches de tissu maillé de fibres (16, 18) sont tendues de manière à obtenir une forme de section transversale prédéterminée.

9. Procédé selon la revendication 8,
**caractérisé en ce que** la forme de section transversale prédéterminée est une forme en Z.

10. Procédé selon l'une des revendications 6 à 9,
**caractérisé en ce que** la couche de tissu maillé de fibres (16, 18) est un préimprégné.

11. Procédé selon l'une des revendications 6 à 10,
**caractérisé en ce que** chaque couche de tissu maillé de fibres (16, 18) est préconfectionnée.
